# EUROPEAN PATENT SPECIFICATION

(11) **EP 3 916 319 B1**
(45) Date of publication and mention of the grant of the patent: **30.11.2022**
(21) Application number: 20176493.3
(22) Date of filing: 26.05.2020
(51) Int. Cl.: F24S 20/50, F24S 23/77, F24S 30/425, H02S 30/20

(54) **FOLDABLE AND TILTABLE DEVICE FOR THE CONVERSION OR DEFLECTION OF SOLAR RADIATION**
KLAPPBARE UND KIPPBARE VORRICHTUNG FÜR DIE UMWANDLUNG ODER UMLENKUNG VON SOLARSTRAHLUNG
DISPOSITIF PLIABLE ET INCLINABLE POUR LA CONVERSION OU DÉVIATION DE RAYONNEMENT SOLAIRE

(43) Date of publication of application: 01.12.2021
(73) Proprietor: Technische Universität Graz, 8010 Graz (AT)
(72) Inventor: Preßmair, Rupert, 8010 Graz (AT); Buchroithner, Armin, 8042 Graz (AT)
(74) Representative: Patentanwaltskanzlei Matschnig & Forsthuber OG

(56) References cited:
- WO-A2-2010/039035
- US-A1- 2008 163 864

## Description

### Field of the invention and description of prior art

The present invention relates to a foldable and tiltable device for the conversion or deflection of solar radiation, said device comprising at least one first and one second panel, wherein each panel has an optically relevant surface for converting or deflecting solar radiation, a base frame, and a combined folding and tilting system for transitioning the at least two panels with respect to each other between a closed folded position, wherein the optically relevant surfaces of the first and the second panel are facing each other in an idle position, protecting the optically relevant surfaces from environmentally caused degradation, and an opened unfolded position, wherein the optically relevant surfaces are put into a tilted position and opened with respect to each other to be exposable to solar radiation, wherein the combined folding and tilting system comprises a folding mechanism for mechanically guiding the folding movement of the second panel with respect to the first panel when switching between the opened unfolded position and the closed folded position.

Moreover, the present invention relates to a sun tracking system comprising a device according to the invention and a base platform, wherein the base frame of the device is pivotably connected to the base platform allowing rotational movement of the device with regard to the base platform around a vertical axis. Also, the present invention relates to a concentrating solar thermal power system comprising a sun tracking system according to the present invention.

Foldable and tiltable devices for the conversion or deflection of solar radiation are known from the prior art. For instance, document DE 199 52 276 A1 discloses a reflector having foldable wings. Some of the reflectors known from prior art also have additional means to enable tilting of the reflector on top of folding movements. The mechanical and electrical system required to do so is usually complex and affects the overall reliability, stability and costs of the devices. However, non-foldable devices are prone to environmental conditions, which can cause degradation of the optically relevant surfaces.

For instance reflectors of concentrated solar power (CSP) applications require direct sunlight, they are most efficient when located in regions where the direct normal irradiance (DNI) is high throughout the year. These regions are usually very arid and come along with harsh environmental conditions. Sand and dust in combination with high wind velocities can reduce the performance of the CSP plant due to soiling of the heliostat's reflective surface and optical errors caused by mirror deflection. Furthermore, airborne particles can cause irreversible damage of the mirror surfaces over time (e.g. loss of reflectance due to erosion).

Hence, there is a need for high reliability and robustness of foldable and tiltable devices for the conversion or deflection of solar radiation while minimizing their production and maintenance costs.

US 2008/163864 A1 discloses a foldable and tiltable device for the conversion or deflection of solar radiation according to the preamble of claim 1.

### Summary of the invention

It is an object of the present invention to overcome the drawbacks of the prior art. This object is achieved by a foldable and tiltable device for the conversion or deflection of solar radiation of the above mentioned kind, wherein according to the invention
the first panel is pivotably connected to the base frame on a first bearing point, and
the combined folding and tilting system further comprises
   - a linear actuator comprising a linear moveable actuating element that is movable between a start position and an end position, wherein the linear actuator is
      o pivotably mounted to the base frame on a base bearing point and
      o its actuating element is mechanically connected to the folding mechanism,
      wherein the arrangement of the first bearing point, the base bearing point and the folding mechanism is configured to enable the actuating element of the linear actuator to sequentially trigger a folding action and a tilting action (for instance of the optically relevant surfaces) by
   - starting with the closed folded position when the actuating element is in the starting position
   - entering a fully unfolded, preferably horizontal, position when the actuating element is in an intermediate position, and
   - reaching a fully unfolded and tilted position when the actuating element is in a final position by rotating the fully unfolded panels around the first bearing point.

The unfolding and tilting procedure can also be reversed simply by reverse movement of the actuating element into its starting position. The entire folding and tilting procedure is only controlled by the single actuating element and respectively the actuator or a control unit controlling the actuator. Hence, no additional motors or actuators are needed to enable a tiltand folding movement of the panels. The term "sequential" means, that only when one step is finished the next step will start. For instance, only after fully unfolding the panels, the tilting mechanism will come into action and allow tilting of the panels. The present invention allows a high reliability and robustness of the foldable and tiltable device for the conversion or deflection of solar radiation while minimizing production and maintenance costs. The linear moveable actuating element is configured to move along the actuating lever in a linear motion. The lever itself can be rotatably mounted to the base frame.

Preferably, the folding mechanism is configured to arrange the panels in line with respect to each other when in the fully unfolded position. In the event that the panels are flat, the panels can be arranged in a single plane or parallel to each other. However, in case that the panels are uneven, in particular curved, the panels can be arranged in a way that a steady incline is continuously differentiable in the transitional area (interstice or hinge) between the panels.

Advantageously, the device further comprises a first locking mechanism for locking the first panel in a closed folded position on the base frame, wherein the locking mechanism comprises a hooking element that is connected to the base frame and configured to engage with the first panel when being in the closed folded position and hence fixing the first panel on the base frame, wherein the second panel comprises engaging means, said engaging means being configured to release the hooking element from engaging with the first panel when the second panel enters the fully unfolded position. By virtue of this first locking mechanism, automatic mechanical locking and unlocking is enabled, which will be triggered by the actuating element. Locking the first panel allows to protect the panels from environmental influences and to secure against mechanical forces which could otherwise cause wear on the mechanical parts of the device, in particular the actuator. For instance at night or during wind storms the panels can be folded down and the first panel will be automatically locked on the base frame. Thus, no unintended tilting is possible. Preferably, the release of the hooking element by way of the engaging means is controlled with the actuator by virtue of the position of the actuating element, wherein unfolding the panels with the actuating element mechanically triggers the release of the hooking element.

Advantageously, the device further comprises a second locking mechanism for locking the second panel with regard to the first panel in a fully unfolded position preventing accidental folding of the second panel. Preferably, the second locking mechanism comprises two toggling levers each having the same length, wherein a first toggling lever is pivotably connected to the first panel and a second toggling lever is pivotably connected to the second panel, wherein the toggling levers are also pivotably connected to another, wherein the respective pivoting axes of the levers on the panels are arranged in a way that these axes are coaxially aligned when the panels are in the fully unfolded position thus allowing the toggling levers to tilt into a locking position by pivoting around the coaxial axis and consequently locking the second panel with regard to the first panel. Thus, the locking of the panels with respect to each other is only triggered by the actuating element after fully unfolding the panels. Once the tilting movement of the panels starts, the panels are already locked with respect to each other. Of course, the locking mechanism also automatically unlocks when the tilting is reversed and the panels are - by virtue of movement of the actuating element back towards the starting position - put down into the non-tilted position and after unlocking the second locking mechanism folded back to an idle position when the actuating element reaches the starting position. Locking the panels with respect to another reduces mechanical loads on the actuator and secures the tilted panels against mechanical impacts which can be caused by wind gusts or alike. Hence, a much lighter and cost effective design of the device is possible.

Both locking mechanisms are controlled, i.e. locked and unlocked, by the actuator and hence allow automatic and secure locking of the panels while not requiring any additional electric actuators.

Advantageously, the panels comprise sealing lips arranged to touch another when the panels are put in the closed folded position. These sealing lips protect the optically relevant surfaces of the panels against dust, dirt or other environmental impacts, which may intrude through the interstice between the two optically relevant surfaces facing each other.

Preferably, the linear actuator also comprises a straight lever wherein the linear movement of the actuating element takes place along this lever. This actuating lever may pivot relative to the base frame and the panels.

Advantageously, the panels comprise optical mirrors,wherein the optically relevant surfaces of the panels are the surfaces of these optical mirrors. By way of these features, the device can be used as a heliostat. The term "optical mirror" means an element that is designed for the purpose of efficient light reflection. The heliostats could be part of a concentrated solar power plant.

Preferably, the panels comprise photovoltaic cells and the optically relevant surfaces of the panels are the surfaces of these photovoltaic cells. Hence, direct conversion of sunlight into electricity is possible.

The present invention further relates to a sun tracking system comprising a device according to the invention and a base platform, wherein the base frame of the device is pivotably connected to the base platform allowing rotational movement of the device with regard to the base platform around a vertical axis. This allows, next to tilting the panels, also to reorient the panels by turning the entire device including the panels around a vertical axis. Such a turning mechanism could be for instance implemented by way of an azimuth carousel.

If not stated otherwise, the terms "horizontal", "vertical" etc. refer to a mounted operational position of the device.

Also, the present invention relates to a concentrating solar thermal power system comprising a sun tracking system according to the present invention.

The invention allows to design a FLAP heliostat (Face-to-face Low-profile Antidegradation Protection). The folding mechanism is actuated by the same actuation system as used for elevation tracking in order to avoid costs for additional drives.
- The mechanical load during folding can be of the same magnitude as the load during tracking, i.e. the drives do not need to be increased in capacity for sake of the folding mechanism.
- The folding panels of the heliostat can be locked against undesired collapse during tracking operation (similar to the requirements for a retractable airplane landing gear).
- The heliostat can be ready for tracking within a matter of minutes or even significantly faster, depending on the choice of actuator technology.

### Brief description of the drawings

In the following, in order to further demonstrate the present invention, illustrative and non-restrictive embodiments are discussed, as shown in the drawings, which show:
- Figure 1: a schematic view of the device according to the invention in three different positions P5 to P8,
- Figure 2: a perspective view of the device according to Fig. 1 in a fully folded and locked position P1,
- Figures 3a to 3c: the different details of the device in the folded and locked position P1,
- Figures 4a to 6c: details of the device during the unfolding procedure,
- Figures 7a to 7c: details of the device in a fully unfolded non-tilted position P5,
- Figures 8a to 9c: details of the device in fully unfolded tilted positions P6 and P7, and
- Figure 10: a perspective view of the device according to the invention being part of a sun tracking system.

### Detailed description of embodiments of the invention

In the following figures identical reference signs refer to identical features unless expressly depicted otherwise.

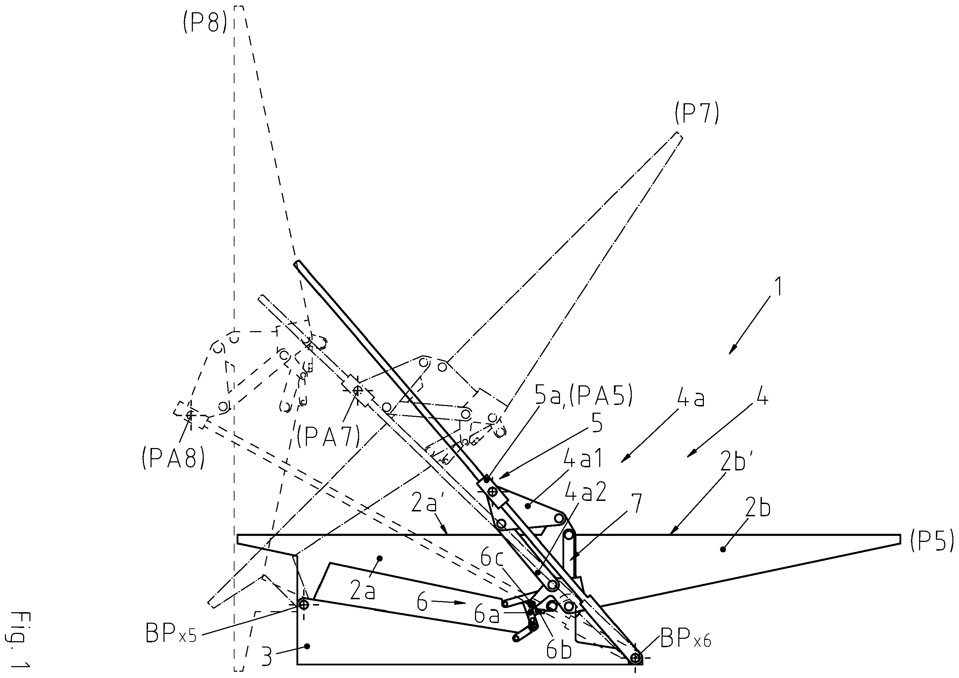

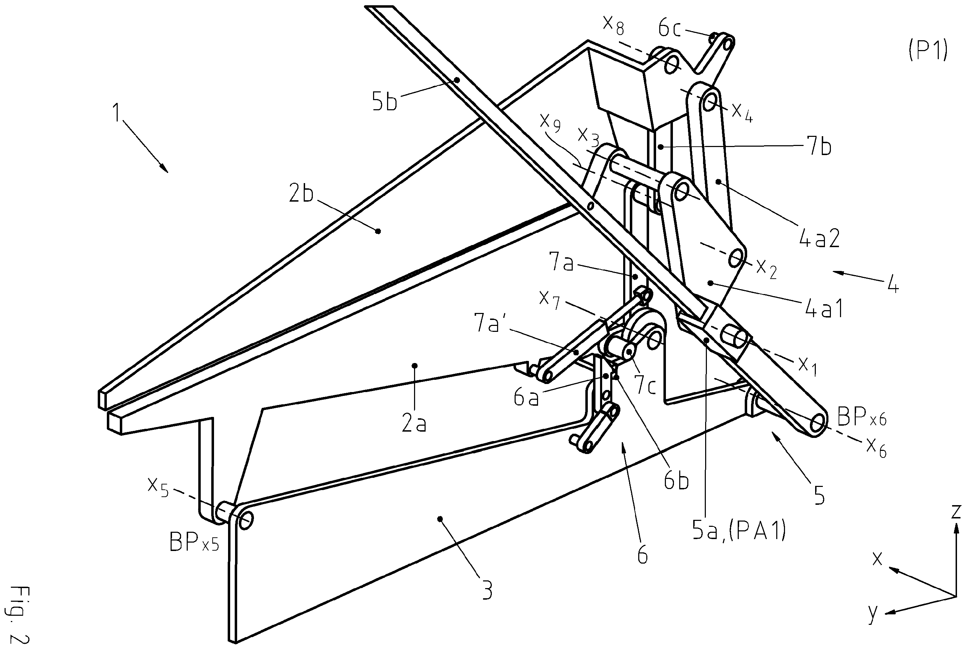

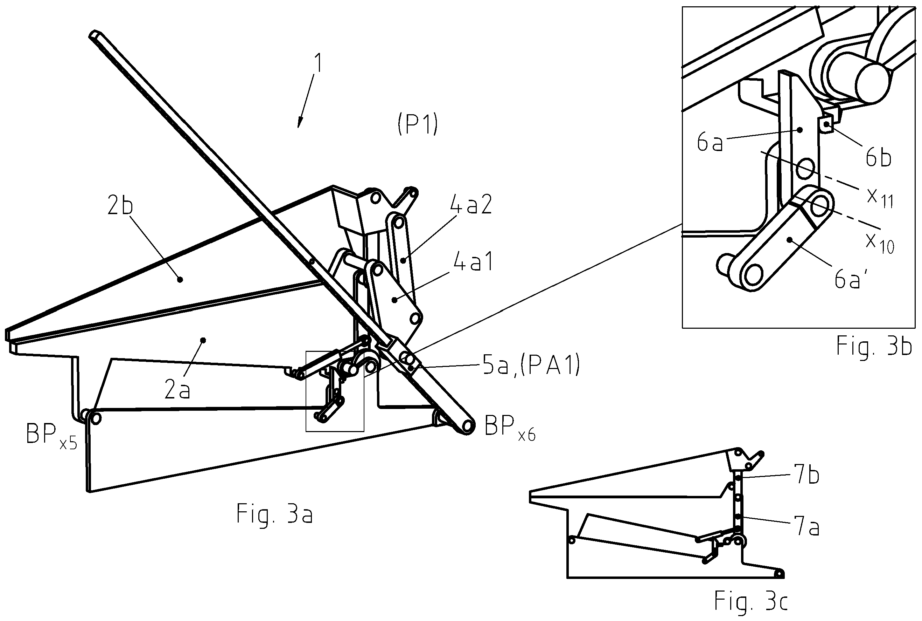

Figure 1 shows a schematic view of the foldable and tiltable device 1 according to the invention in three different positions P5 to P8. The device 1 is configured to convert or deflect solar radiation and comprises in the embodiment according to the figures one first 2a and one second panel 2b. Each panel 2a, 2b has an optically relevant surface 2a' and 2b' for converting or deflecting solar radiation. The device 1 further comprises a base frame 3, and a combined folding and tilting system 4 for transitioning the at least two panels 2a, 2b with respect to each other between
- a closed folded position P1 (see Fig. 2 and Fig. 3a to 3b), wherein the optically relevant surfaces 2a', 2b' of the first and the second panel 2a and 2b are facing each other in an idle position, protecting the optically relevant surfaces 2a' and 2b' from environmentally caused degradation, and
- an opened unfolded position P6, P7, P8, wherein the optically relevant surfaces 2a', 2b' are put into a tilted position and opened with respect to each other to be exposable to solar radiation.

The combined folding and tilting system 4 comprises a folding mechanism 4a1 and 4a2 for mechanically guiding the folding movement of the second panel 2b with respect to the first panel 2a when switching between the opened unfolded position P6, P7, P8 and the closed folded position P1. The first panel 2a is pivotably connected to the base frame 3 on a first bearing point BPₓ₅.

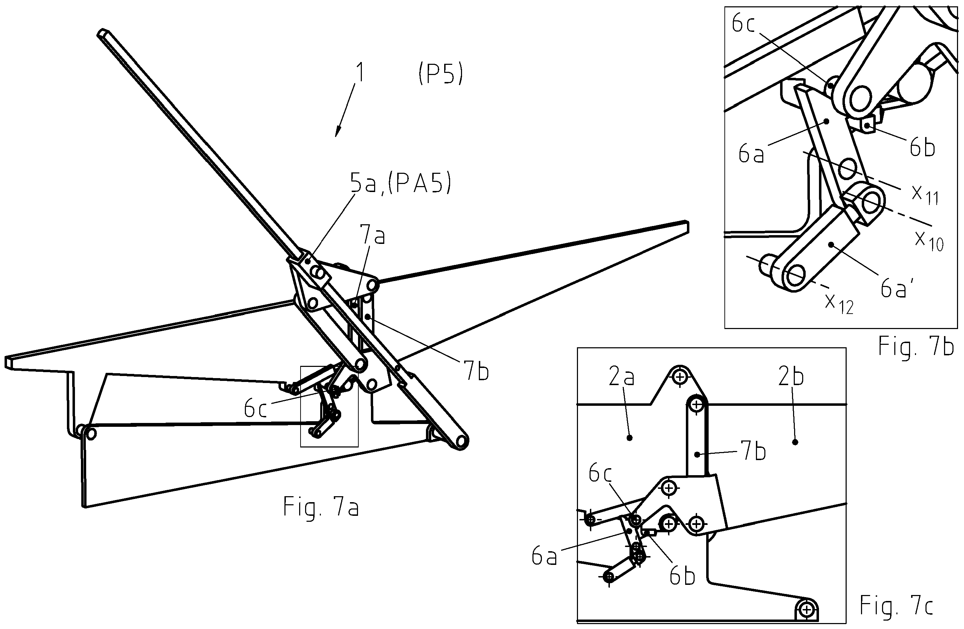

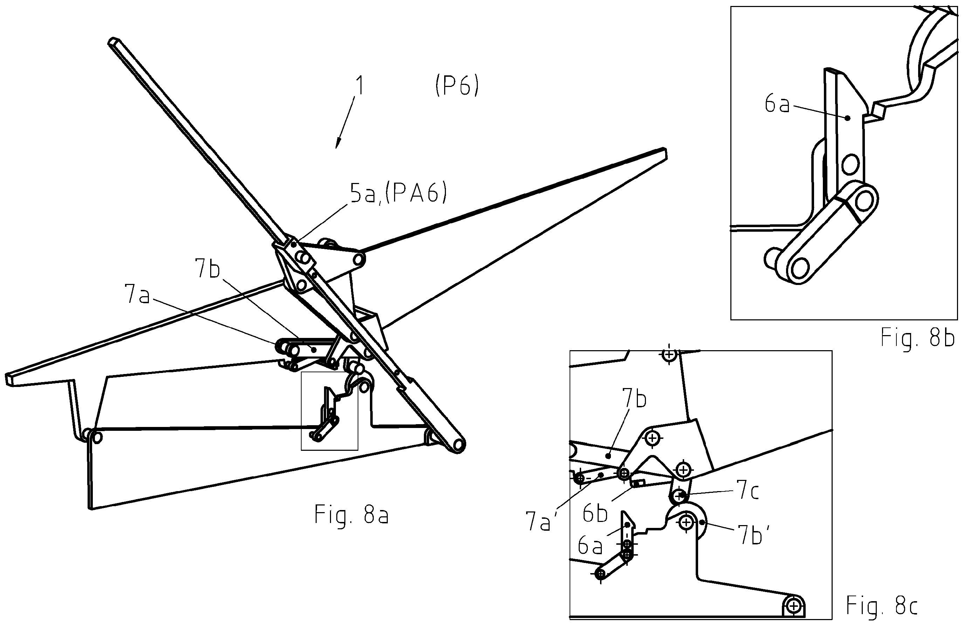

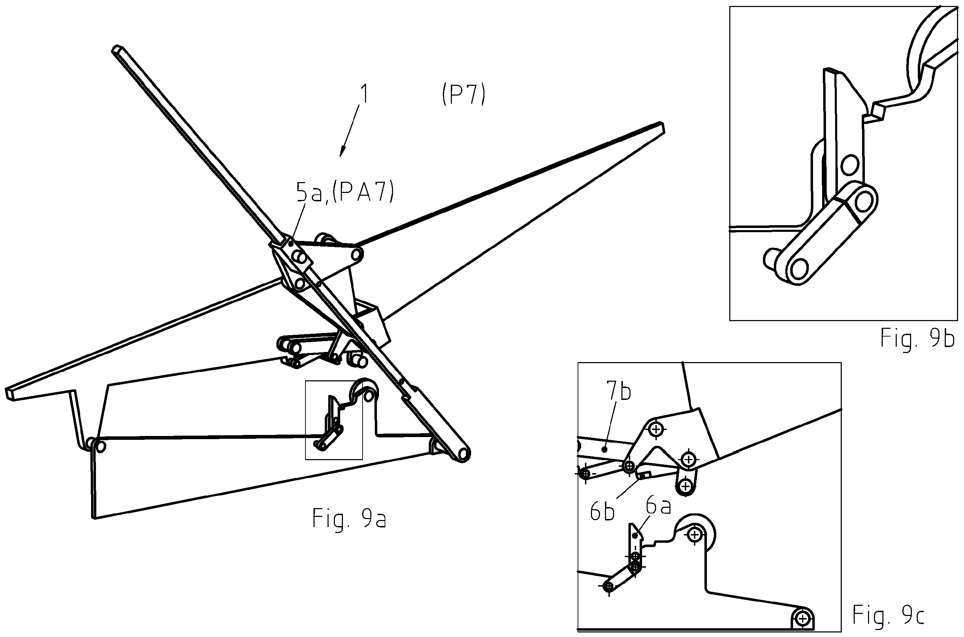

The combined folding and tilting system 4 further comprises a linear actuator 5 comprising a linear moveable actuating element 5a that is movable between a start position PA1 and an end position PA8 (or PA6, PA7 see Figures 8a and 9a). The linear actuator 5 is pivotably mounted to the base frame 3 on a base bearing point BPₓ₆ and its actuating element 5a is mechanically connected to the folding mechanism 4a1, 4a2. The arrangement of the first bearing point BPₓ₅, the base bearing point BPₓ₆ and the folding mechanism 4a1, 4a2 is configured to enable the actuating element 5a of the linear actuator 5 to sequentially trigger a folding action and a tilting action by starting with the closed folded position P1 (see Fig. 2 and Fig. 3a) when the actuating element 5a is in the starting position PA1, entering a fully unfolded, preferably horizontal, position P5 when the actuating element 5a is in an intermediate position PA5 (see Fig. 1 and Fig. 7a), and reaching a fully unfolded and tilted position P6, P7 (see Fig. 8a and 9a), P8 (see Fig. 1) when the actuating element is in a final position PA6, PA7, PA8 by rotating the fully unfolded panels 2a, 2b around the first bearing point BPₓ₅.

Fig. 2 shows a perspective view of the device 1 according to Fig. 1 in a fully folded and locked position P1. Fig. 2 shows a plurality of joints (for instance realized as a bearing, however, of course also other mechanical mechanisms like hinges, flexible bending elements or alike can be used, allowing according movement of the mechanical parts) and rotational axes x₁ to x₉ of mechanical parts of the device 1. For instance, the first panel 2a can tilt together with the second panel 2b around a horizontal axis x₅ on the bearing point BPₓ₅. The second panel 2b folds regarding to the first panel 2a around the horizontal axis x₃.

The folding mechanism 4a1, 4a2 is configured to arrange the panels 2a, 2b in line with respect to each other when the panels 2a, 2b are arranged in the fully unfolded position P5.

The device 1 further comprises a first locking mechanism 6 for locking the first panel 2a in a closed folded position P1 on the base frame 3. The locking mechanism 6 comprises a hooking element 6a that is connected to the base frame 3 and configured to engage with the first panel 2a (by engaging with a corresponding protrusion 6b mounted on the first panel 2a) when being in the closed folded position P1 and hence fixing the first panel 2a on the base frame 3. As can be seen from Fig. 3b and Fig. 7b, the hooking element 6a can be rotated along the horizontal axis x₁₁. During the locked position the hooking element 6a fixes the protrusion 6b and therefore the first panel 2a. The hooking element can be for instance held in place by the force of a pulling element 6a', that can be rotatably connected to the hooking element 6a having a bearing point in an common axis x₁₀, wherein the pulling element 6a' can rotate around a horizontal axis x₁₂.

The second panel 2b comprises engaging means 6c (see also Fig. 7a, 7b, 7c), said engaging means 6c being configured to release the hooking element 6a from engaging with the first panel 2a when the second panel 2b enters the fully unfolded position P5. As can be seen from Fig. 7a to 7c, the release of the hooking element 6a by way of the engaging means 6c is controlled with the actuator 5 by virtue of the position of the actuating element 5a, wherein unfolding the panels 2a, 2b with the actuating element 5a mechanically triggers the release of the hooking element 6a.

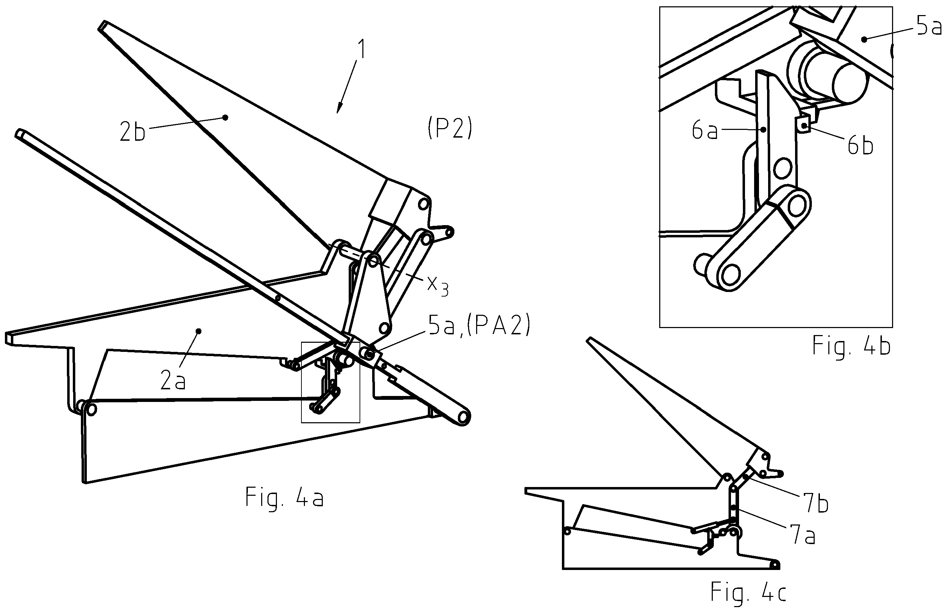

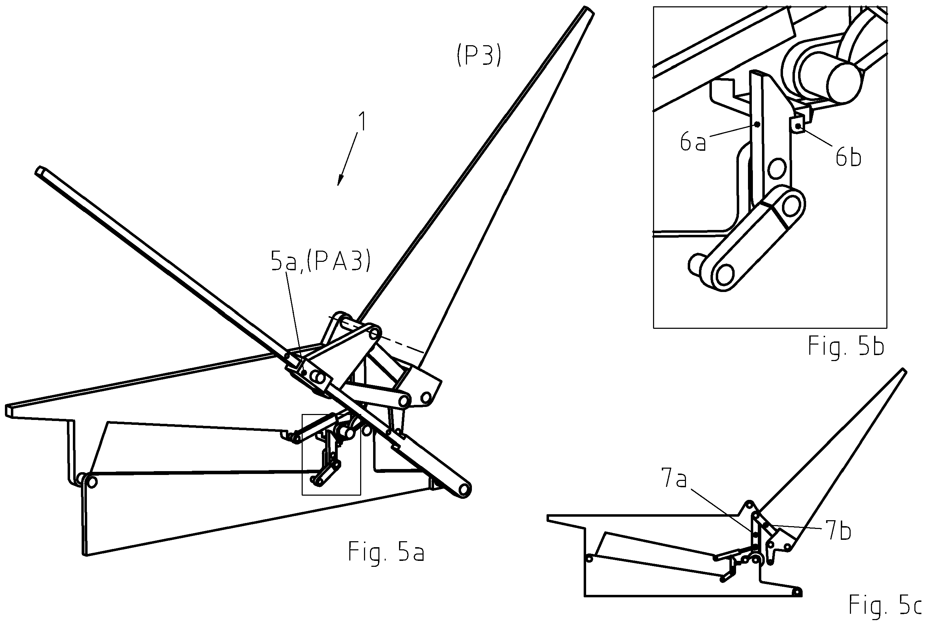

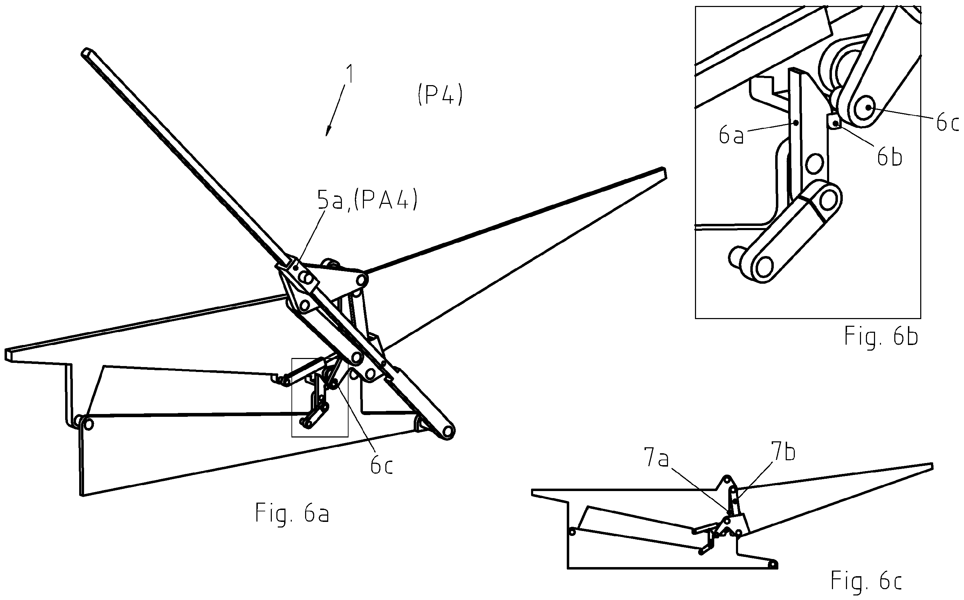

Taking another look at Fig. 2, it can be seen that the device 1 further comprises a second locking mechanism 7 for locking the second panel 2b with regard to the first panel 2a in a fully unfolded position P6, P7, P8 preventing accidental folding of the second panel 2b. In detail, the second locking mechanism 7 comprises two toggling levers 7a, 7b (see Fig. 3c, 4c, 5c, 6c, 7c, and 8c) each having the same length, wherein a first toggling lever 7a is pivotably connected to the first panel 2a (and rotatable around the horizontal axis x₇) and a second toggling lever 7b is pivotably connected to the second panel 2b (and rotatable around the horizontal axis x₈), wherein the toggling levers 7a, 7b are also pivotably connected to another (rotatable around the horizontal axis x₉), wherein the respective pivoting axes x₇, x₈ of the levers 7a, 7b on the panels 2a, 2b are arranged in a way that these axes x₇, x₈ are coaxially aligned when the panels 2a and 2b are in the fully unfolded position P6, P7, P8 thus allowing the toggling levers 7a and 7b to tilt together into a locking position by pivoting around the coaxial axes x₇ and x₈, consequently locking the second panel 2b with regard to the first panel 2a.

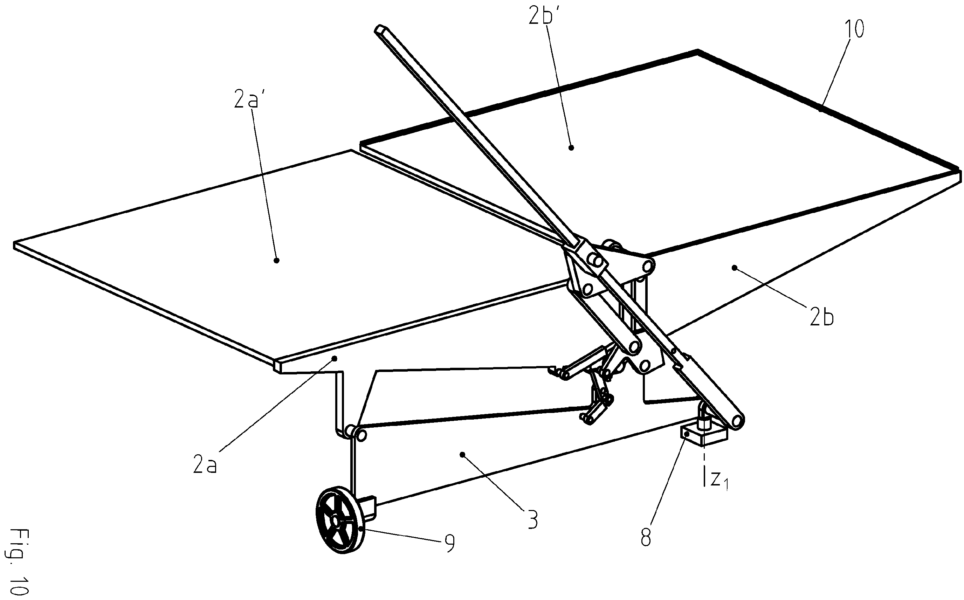

Preferably, the panels 2a, 2b comprise sealing lips 10 (see Fig. 10) arranged to touch another when the panels 2a, 2b are put in the closed folded position P1.

As shown in Fig. 2, the linear actuator 5 also comprises a straight lever 5b wherein the linear movement of the actuating element 5a takes place along this lever 5b.

Fig. 3a to Fig. 9c show a sequence of movement of the actuating element 5a of the device 1, wherein in Fig. 3a the actuating elements 5a rests in a starting position PA1 and in Fig. 9a (and corresponding Fig. 9c) the actuating element 5a has reached a final position PA7 corresponding to a tilted fully unfolded position P7 of the panels 2a and 2b. Of course, the final position can differ - for instance position P8 shown in Fig. 8 corresponds to an even further extended final position. The maximum of the final position is determined by the actuator 5 and the mechanical system of the device 1 as such. It is also possible to design the device 1 in a way that allows an entirely vertical tilt (i.e. at least 90° relative to the base frame, or more, if desired) of the panels 2a and 2b. For the sake of better overview only a few reference signs were added to Fig. 3a to Fig. 9c.

At the transition of device 1 from position P5 to P6, the retraction of the second locking mechanism 7 into a locked position can be driven by means of a pulling element 7a' (see Fig. 2 and Fig. 8c), which is pivotably connected to the toggling lever 7a. At the reverse transition of device 1 from P6 to P5 the tilting of the locking levers 7a, 7b into an unlocked position can be driven by a cam element 7b'mounted on the base frame 3 and engaging means 7c mounted on the locking lever 7b, said engaging means 7c being configured to trigger tilting of the locking levers 7a, 7b into an unlocked position.

Of course, the invention is not limited to the examples given in this specification. Also, as long as not expressively excluded, all the features of the invention can be freely combined. The reference numerals are only for informational purpose and do not delimit the scope of protection.

## Claims

1. Foldable and tiltable device (1) for the conversion or deflection of solar radiation, said device comprising
- at least one first (2a) and one second panel (2b), wherein each panel (2a, 2b) has an optically relevant surface (2a', 2b') for converting or deflecting solar radiation,
- a base frame (3), and
- a combined folding and tilting system (4) for transitioning the at least two panels (2a, 2b) with respect to each other between
• a closed folded position (P1), wherein the optically relevant surfaces (2a', 2b') of the first and the second panel (2a, 2b) are facing each other in an idle position, protecting the optically relevant surfaces (2a', 2b') from environmentally caused degradation, and
• an opened unfolded position (P6, P7, P8), wherein the optically relevant surfaces (2a', 2b') are put into a tilted position and opened with respect to each other to be exposable to solar radiation,
wherein the combined folding and tilting system (4) comprises a folding mechanism (4a1, 4a2) for mechanically guiding the folding movement of the second panel (2b) with respect to the first panel (2a) when switching between the opened unfolded position (P5, P6, P7, P8) and the closed folded position (P1),
**characterized in that**
the first panel (2a) is pivotably connected to the base frame (3) on a first bearing point (BPₓ₅), and the combined folding and tilting system (4) further comprises
- a linear actuator (5) comprising an actuating element (5a) that is guided along the actuating lever to enable a movement between a start position (PA1) and an end position (PA6, PA7, PA8), wherein the linear actuator (5) is
∘ pivotably mounted to the base frame (3) via the base bearing point (BPₓ₆) and
∘ its actuating element (5) is mechanically connected to the folding mechanism (4a1, 4a2),
wherein the arrangement of the first bearing point (BPₓ₅), the base bearing point (BPₓ₆) and the folding mechanism (4a1, 4a2) is configured to enable the actuating element (5a) of the linear actuator (5) to sequentially trigger a folding action and a tilting action by
- starting with the closed folded position (P1) when the actuating element (5a) is in the starting position (PA1)
- entering a fully unfolded, preferably horizontal, position (P5) when the actuating element (5a) is in an intermediate position (PA5), and
- reaching a fully unfolded and tilted position (P6, P7, P8) when the actuating element is in a final position (PA6, PA7, PA8) by rotating the fully unfolded panels (2a, 2b) around the first bearing point (BPₓ₅).

2. Device (1) according to claim 1, wherein the folding mechanism (4a1, 4a2) is configured to arrange the panels (2a, 2b) in line with respect to each other when the panels (2a, 2b) are arranged in the fully unfolded position (P5).

3. Device (1) according to claim 1 or 2, wherein the device (1) further comprises a first locking mechanism (6) for locking the first panel (2a) in a closed folded position (P1) on the base frame (3), wherein the locking mechanism (6) comprises a hooking element (6a) that is connected to the base frame (3) and configured to engage with the first panel (2a) when being in the closed folded position (P1) and hence fixing the first panel (2a) on the base frame (3), wherein the second panel (2b) comprises engaging means (6c), said engaging means (6c) being configured to release the hooking element (6a) from engaging with the first panel (2a) when the second panel (2b) enters the fully unfolded position (P5).

4. Device (1) according to claim 3, wherein release of the hooking element (6a) by way of the engaging means (6c) is controlled with the actuator (5) by virtue of the position of the actuating element (5a), wherein unfolding the panels (2a, 2b) with the actuating element (5a) mechanically triggers the release of the hooking element (6a).

5. Device (1) according to any of the preceding claims, wherein the device (1) further comprises a second locking mechanism (7) for locking the second panel (2b) with regard to the first panel (2a) in a fully unfolded position (P6, P7, P8) preventing accidental folding of the second panel (2b).

6. Device (1) according to claim 5, wherein the second locking mechanism (7) comprises two toggling levers (7a, 7b) each having the same length, wherein a first toggling lever (7a) is pivotably connected to the first panel (2a) and a second toggling lever (7b) is pivotably connected to the second panel (2b), wherein the toggling levers (7a, 7b) are also pivotably connected to another, wherein the respective pivoting axes (x₇, x₈) of the levers (7a, 7b) on the panels (2a, 2b) are arranged in a way that these axes (x₇, x₈) are coaxially aligned when the panels (2a, 2b) are in the fully unfolded position (P6, P7, P8) thus allowing the toggling levers (7a, 7b) to tilt into a locking position by pivoting around the coaxial axis (x₇, ₓ₈) and consequently locking the second panel (2b) with regard to the first panel (2a).

7. Device (1) according to any of the preceding claims, wherein the panels (2a, 2b) comprise sealing lips (10) arranged to touch another when the panels (2a, 2b) are put in the closed folded position (P1).

8. Device (1) according to any of the preceding claims, wherein the linear actuator (5) also comprises a straight lever (5b) wherein the actuating element (5a) is guided along the direct axis of this lever (5b).

9. Device (1) according to any of the preceding claims, wherein the panels (2a, 2b) comprise optical mirrors and wherein the optically relevant surfaces (2a', 2b') of the panels are the surfaces of these optical mirrors.

10. Device (1) according to any of the claims 1 to 8, wherein the panels (2a, 2b) comprise photovoltaic cells and wherein the optically relevant surfaces (2a', 2b') of the panels are the surfaces of these photovoltaic cells.

11. Sun tracking system comprising a device (1) according to any of the preceding claims and a base platform (8), wherein the base frame (3) of the device (1) is pivotably connected to the base platform (8) allowing rotational movement of the device (1) with regard to the base platform (8) around a vertical axis (z₁).

12. Concentrating solar thermal power system comprising a sun tracking system according to claim 11.

## Patentansprüche

1. Zusammenklappbare und kippbare Vorrichtung (1) zur Umwandlung oder Ablenkung von Sonnenstrahlung, wobei die Vorrichtung umfasst
- mindestens ein erstes (2a) und ein zweites Paneel (2b), wobei jedes Paneel (2a, 2b) eine optisch relevante Oberfläche (2a', 2b') zur Umwandlung oder Ablenkung von Sonnenstrahlung aufweist,
- einen Grundrahmen (3), und
- ein kombiniertes Falt- und Kippsystem (4), um die mindestens zwei Paneele (2a, 2b) in Bezug zueinander zu bewegen zwischen
- einer geschlossenen gefalteten Position (P1), in der die optisch relevanten Oberflächen (2a', 2b') des ersten und des zweiten Paneels (2a, 2b) in einer Ruheposition einander zugewandt sind, wodurch die optisch relevanten Oberflächen (2a', 2b') vor umweltbedingter Verschlechterung geschützt werden, und
- eine geöffnete, ungefaltete Position (P6, P7, P8), in der die optisch relevanten Oberflächen (2a', 2b') in eine gekippte Position gebracht und in Bezug zueinander geöffnet werden, um der Sonnenstrahlung ausgesetzt werden zu können,
wobei das kombinierte Falt- und Kippsystem (4) einen Faltmechanismus (4a1, 4a2) zum mechanischen Führen der Faltbewegung des zweiten Paneels (2b) in Bezug auf das erste Paneel (2a) beim Umschalten zwischen der geöffneten ungefalteten Position (P5, P6, P7, P8) und der geschlossenen gefalteten Position (P1) umfasst,
**dadurch gekennzeichnet, dass**
das erste Paneel (2a) schwenkbar mit dem Grundrahmen (3) an einem ersten Lagerpunkt (BPx5) verbunden ist, und das kombinierte Falt- und Kippsystem (4) ferner umfasst
- einen linearen Aktuator (5), der ein Betätigungselement (5a) umfasst, das entlang des Betätigungshebels geführt wird, um eine Bewegung zwischen einer Startposition (PA1) und einer Endposition (PA6, PA7, PA8) zu ermöglichen, wobei der lineare Aktuator (5)
∘ über den Basislagerpunkt (BPx6) schwenkbar am Grundrahmen (3) gelagert ist und
∘ sein Betätigungselement (5) mechanisch mit dem Klappmechanismus (4a1, 4a2) verbunden ist,
wobei die Anordnung des ersten Lagerpunkts (BPx5), des Basislagerpunkts (BPx6) und des Faltmechanismus (4a1, 4a2) so gestaltet ist, dass das Betätigungselement (5a) des linearen Stellglieds (5) nacheinander einen Faltvorgang und einen Kippvorgang auslösen kann, indem
- ausgehend von der geschlossenen, gefalteten Position (P1), wenn sich das Betätigungselement (5a) in der Ausgangsposition (PA1) befindet
- Erreichen einer vollständig entfalteten, vorzugsweise horizontalen, Position (P5), wenn sich das Betätigungselement (5a) in einer Zwischenposition (PA5) befindet, und
- Erreichen einer vollständig ausgeklappten und gekippten Position (P6, P7, P8), wenn sich das Betätigungselement in einer Endposition (PA6, PA7, PA8) befindet, durch Drehen der vollständig ausgeklappten Platten (2a, 2b) um den ersten Lagerpunkt (BPx5).

2. Vorrichtung (1) nach Anspruch 1, wobei der Faltmechanismus (4a1, 4a2) so konfiguriert ist, dass er die Platten (2a, 2b) in einer Linie zueinander anordnet, wenn die Platten (2a, 2b) in der vollständig entfalteten Position (P5) angeordnet sind.

3. Vorrichtung (1) nach Anspruch 1 oder 2, wobei die Vorrichtung (1) ferner einen ersten Verriegelungsmechanismus (6) zum Verriegeln des ersten Paneels (2a) in einer geschlossenen gefalteten Position (P1) auf dem Grundrahmen (3) umfasst, wobei der Verriegelungsmechanismus (6) ein Hakenelement (6a) umfasst, das mit dem Grundrahmen (3) verbunden und so konfiguriert ist, dass es mit dem ersten Paneel (2a) in Eingriff kommt, wenn es sich in der geschlossenen gefalteten Position (P1) befindet, und somit das erste Paneel (2a) auf dem Grundrahmen (3) fixiert, wobei das zweite Paneel (2b) Eingriffsmittel (6c) umfasst, wobei die Eingriffsmittel (6c) so konfiguriert sind, dass sie das Hakenelement (6a) aus dem Eingriff mit dem ersten Paneel (2a) lösen, wenn das zweite Paneel (2b) in die vollständig entfaltete Position (P5) eintritt.

4. Vorrichtung (1) nach Anspruch 3, wobei die Freigabe des Hakenelements (6a) über die Eingriffsmittel (6c) mit dem Stellglied (5) aufgrund der Position des Betätigungselements (5a) gesteuert wird, wobei das Aufklappen der Platten (2a, 2b) mit dem Betätigungselement (5a) die Freigabe des Hakenelements (6a) mechanisch auslöst.

5. Vorrichtung (1) nach einem der vorhergehenden Ansprüche, wobei die Vorrichtung (1) ferner einen zweiten Verriegelungsmechanismus (7) zum Verriegeln des zweiten Paneels (2b) in Bezug auf das erste Paneel (2a) in einer vollständig ausgeklappten Position (P6, P7, P8) umfasst, um ein unbeabsichtigtes Falten des zweiten Paneels (2b) zu verhindern.

6. Vorrichtung (1) nach Anspruch 5, wobei der zweite Verriegelungsmechanismus (7) zwei jeweils gleich lange Kipphebel (7a, 7b) aufweist, wobei ein erster Kipphebel (7a) schwenkbar mit der ersten Platte (2a) und ein zweiter Kipphebel (7b) schwenkbar mit der zweiten Platte (2b) verbunden ist, wobei die Kipphebel (7a, 7b) ebenfalls schwenkbar miteinander verbunden sind, wobei die jeweiligen Schwenkachsen (x7, x8) der Hebel (7a, 7b) an den Paneelen (2a, 2b) so angeordnet sind, dass diese Achsen (x7, x8) koaxial ausgerichtet sind, wenn sich die Paneele (2a, 2b) in der vollständig ausgeklappten Position (P6, P7, P8) befinden, so dass die Kipphebel (7a, 7b) durch Schwenken um die koaxiale Achse (x7, x8) in eine Verriegelungsposition kippen und folglich das zweite Paneel (2b) in Bezug auf das erste Paneel (2a) verriegeln können.

7. Vorrichtung (1) nach einem der vorhergehenden Ansprüche, wobei die Platten (2a, 2b) Dichtlippen (10) aufweisen, die so angeordnet sind, dass sie einander berühren, wenn die Platten (2a, 2b) in die geschlossene, gefaltete Position (P1) gebracht werden.

8. Vorrichtung (1) nach einem der vorhergehenden Ansprüche, wobei der Linearantrieb (5) auch einen geraden Hebel (5b) umfasst, wobei das Betätigungselement (5a) entlang der direkten Achse dieses Hebels (5b) geführt wird.

9. Vorrichtung (1) nach einem der vorhergehenden Ansprüche, wobei die Platten (2a, 2b) optische Spiegel aufweisen und wobei die optisch relevanten Oberflächen (2a', 2b') der Platten die Oberflächen dieser optischen Spiegel sind.

10. Vorrichtung (1) nach einem der Ansprüche 1 bis 8, wobei die Paneele (2a, 2b) photovoltaische Zellen umfassen und wobei die optisch relevanten Oberflächen (2a', 2b') der Paneele die Oberflächen dieser photovoltaischen Zellen sind.

11. Sonnennachführsystem, umfassend eine Vorrichtung (1) nach einem der vorhergehenden Ansprüche und eine Basisplattform (8), wobei der Grundrahmen (3) der Vorrichtung (1) schwenkbar mit der Basisplattform (8) verbunden ist und eine Drehbewegung der Vorrichtung (1) gegenüber der Basisplattform (8) um eine vertikale Achse (z1) ermöglicht.

12. Thermisches Solarkonzentrationssystem mit einem Sonnennachführsystem nach Anspruch 11.

## Revendications

1. Dispositif pliable et inclinable (1) pour la conversion ou la déviation du rayonnement solaire, ledit dispositif comprenant
- au moins un premier (2a) et un second panneau (2b), dans lequel chaque panneau (2a, 2b) a une surface optiquement pertinente (2a', 2b') pour convertir ou dévier le rayonnement solaire,
- un cadre de base (3), et
- un système combiné de pliage et de basculement (4) pour faire passer les au moins deux panneaux (2a, 2b) l'un par rapport à l'autre entre
- une position pliée fermée (P1), dans laquelle les surfaces optiquement pertinentes (2a', 2b') du premier et du second panneau (2a, 2b) se font face dans une position de repos, protégeant les surfaces optiquement pertinentes (2a', 2b') de la dégradation causée par l'environnement, et
- une position dépliée ouverte (P6, P7, P8), dans laquelle les surfaces optiquement pertinentes (2a', 2b') sont placées dans une position inclinée et ouvertes l'une par rapport à l'autre pour être exposées au rayonnement solaire,
dans lequel le système combiné de pliage et d'inclinaison (4) comprend un mécanisme de pliage (4a1, 4a2) pour guider mécaniquement le mouvement de pliage du second panneau (2b) par rapport au premier panneau (2a) lors de la commutation entre la position dépliée ouverte (P5, P6, P7, P8) et la position pliée fermée (P1),
**caractérisé en ce que**
le premier panneau (2a) est relié de manière pivotante au cadre de base (3) sur un premier point d'appui (BPx5), et le système combiné de pliage et de basculement (4) comprend en outre
- un actionneur linéaire (5) comprenant un élément d'actionnement (5a) qui est guidé le long du levier d'actionnement pour permettre un mouvement entre une position de départ (PA1) et une position finale (PA6, PA7, PA8), dans lequel l'actionneur linéaire (5) est
∘ monté de manière pivotante sur le cadre de base (3) via le point d'appui de base (BPx6) et
∘ son élément d'actionnement (5) est relié mécaniquement au mécanisme de pliage (4a1, 4a2),
dans lequel la disposition du premier point d'appui (BPx5), du point d'appui de base (BPx6) et du mécanisme de pliage (4a1, 4a2) est configurée pour permettre à l'élément d'actionnement (5a) de l'actionneur linéaire (5) de déclencher séquentiellement une action de pliage et une action de basculement en
- commençant par la position pliée fermée (P1) lorsque l'élément d'actionnement (5a) est dans la position de départ (PA1)
- entrant dans une position entièrement dépliée, de préférence horizontale, (P5) lorsque l'élément d'actionnement (5a) est dans une position intermédiaire (PA5), et
- atteindre une position totalement dépliée et inclinée (P6, P7, P8) lorsque l'élément d'actionnement est dans une position finale (PA6, PA7, PA8) en faisant tourner les panneaux totalement dépliés (2a, 2b) autour du premier point d'appui (BPx5).

2. Dispositif (1) selon la revendication 1, dans lequel le mécanisme de pliage (4a1, 4a2) est configuré pour disposer les panneaux (2a, 2b) en ligne les uns par rapport aux autres lorsque les panneaux (2a, 2b) sont disposés dans la position totalement dépliée (P5).

3. Dispositif (1) selon la revendication 1 ou 2, dans lequel le dispositif (1) comprend en outre un premier mécanisme de verrouillage (6) pour verrouiller le premier panneau (2a) dans une position pliée fermée (P1) sur le cadre de base (3), dans lequel le mécanisme de verrouillage (6) comprend un élément d'accrochage (6a) qui est relié au cadre de base (3) et configuré pour s'engager avec le premier panneau (2a) lorsqu'il est dans la position pliée fermée (P1) et donc fixer le premier panneau (2a) sur le cadre de base (3), dans lequel le second panneau (2b) comprend des moyens d'engagement (6c), lesdits moyens d'engagement (6c) étant configurés pour libérer l'élément d'accrochage (6a) de son engagement avec le premier panneau (2a) lorsque le second panneau (2b) entre dans la position entièrement dépliée (P5).

4. Dispositif (1) selon la revendication 3, dans lequel la libération de l'élément d'accrochage (6a) par l'intermédiaire des moyens d'engagement (6c) est commandée avec l'actionneur (5) en vertu de la position de l'élément d'actionnement (5a), dans lequel le dépliage des panneaux (2a, 2b) avec l'élément d'actionnement (5a) déclenche mécaniquement la libération de l'élément d'accrochage (6a).

5. Dispositif (1) selon l'une quelconque des revendications précédentes, dans lequel le dispositif (1) comprend en outre un deuxième mécanisme de verrouillage (7) pour verrouiller le deuxième panneau (2b) par rapport au premier panneau (2a) dans une position totalement dépliée (P6, P7, P8) empêchant un pliage accidentel du deuxième panneau (2b).

6. Dispositif (1) selon la revendication 5, dans lequel le second mécanisme de verrouillage (7) comprend deux leviers basculants (7a, 7b) ayant chacun la même longueur, dans lequel un premier levier basculant (7a) est relié de manière pivotante au premier panneau (2a) et un second levier basculant (7b) est relié de manière pivotante au second panneau (2b), dans lequel les leviers basculants (7a, 7b) sont également reliés de manière pivotante l'un à l'autre, dans lequel les axes de pivotement respectifs (x7, x8) des leviers (7a, 7b) sur les panneaux (2a, 2b) sont disposés de telle sorte que ces axes (x7, x8) sont alignés coaxialement lorsque les panneaux (2a, 2b) sont dans la position entièrement dépliée (P6, P7, P8), permettant ainsi aux leviers basculants (7a, 7b) de basculer dans une position de verrouillage en pivotant autour de l'axe coaxial (x7, x8) et en verrouillant par conséquent le second panneau (2b) par rapport au premier panneau (2a).

7. Dispositif (1) selon l'une quelconque des revendications précédentes, dans lequel les panneaux (2a, 2b) comprennent des lèvres d'étanchéité (10) agencées pour se toucher lorsque les panneaux (2a, 2b) sont mis en position pliée fermée (P1).

8. Dispositif (1) selon l'une quelconque des revendications précédentes, dans lequel l'actionneur linéaire (5) comprend également un levier droit (5b) dans lequel l'élément d'actionnement (5a) est guidé selon l'axe direct de ce levier (5b).

9. Dispositif (1) selon l'une quelconque des revendications précédentes, dans lequel les panneaux (2a, 2b) comprennent des miroirs optiques et dans lequel les surfaces optiquement pertinentes (2a', 2b') des panneaux sont les surfaces de ces miroirs optiques.

10. Dispositif (1) selon l'une quelconque des revendications 1 à 8, dans lequel les panneaux (2a, 2b) comprennent des cellules photovoltaïques et dans lequel les surfaces optiquement pertinentes (2a', 2b') des panneaux sont les surfaces de ces cellules photovoltaïques.

11. Système de suivi du soleil comprenant un dispositif (1) selon l'une quelconque des revendications précédentes et une plateforme de base (8), dans lequel le cadre de base (3) du dispositif (1) est relié de manière pivotante à la plateforme de base (8) permettant un mouvement de rotation du dispositif (1) par rapport à la plateforme de base (8) autour d'un axe vertical (z1).

12. Système d'énergie solaire thermique à concentration comprenant un système de suivi du soleil selon la revendication 11.
